# FASCICULE DE BREVET EUROPEEN

(11) **EP 2 144 768 B1**
(45) Date de publication et mention de la délivrance du brevet: **09.02.2011**
(21) Numéro de dépôt: 08805765.8
(22) Date de dépôt: 09.05.2008
(51) Int. Cl.: B60C 23/00, B60C 23/04, B60C 23/20

(54) **PROCEDE DE MISE EN POSITION DES CAPTEURS DE ROUES JUMELEES D'UN VEHICULE**
VERFAHREN ZUR POSITIONIERUNG VON SENSOREN FÜR ZWILLINGSRÄDER EINES FAHRZEUGS
METHOD OF POSITIONING SENSORS FOR TWINNED WHEELS OF A VEHICLE

(30) Priorité: 09.05.2007 FR 0754933
(43) Date de publication de la demande: 20.01.2010
(73) Titulaire: LDL Technology, 31520 Ramonville Saint Agne (FR)
(72) Inventeur: LEFAURE, Philippe, F-31450 Montbrun Lauragais (FR)
(74) Mandataire: Richebourg, Michel François
(86) Numéro de dépôt international: PCT/FR2008/050816
(87) Numéro de publication internationale: WO 2008/149009

(56) Documents cités:
- EP-A- 1 236 588
- JP-A- 2006 021 660
- US-A1- 2002 130 771
- US-A1- 2005 093 687
- US-A1- 2006 012 475
- US-B1- 6 257 289

## Description

### DOMAINE D'APPLICATION DE L'INVENTION

La présente invention a trait au domaine des capteurs logés dans les pneumatiques et notamment aux adaptations permettant de les différencier et de les situer une fois positionnés dans des pneumatiques de roues jumelées.

### DESCRIPTION DE L'ART ANTÉRIEUR

Il est connu de l'art antérieur des capteurs positionnés à l'intérieur des pneumatiques des véhicules afin de mesurer et de transmettre des informations quant à la pression, à la température, etc...

Pour ce faire, chaque capteur placé dans chaque pneumatique est classiquement équipé d'un émetteur à des fins de transmission sans fil desdites données, à un récepteur placé sur l'essieu ou le châssis du véhicule. Ce récepteur reçoit et décode les signaux informatifs émis par les émetteurs de chaque roue.

Dans certains véhicules tels les poids lourds ainsi que les bus, les roues sont montées par paire à chaque extrémité d'essieu, on dit alors que les roues sont jumelées. Dans un tel cadre, l'exploitation du réseau de capteurs ci-dessus décrit peut présenter des difficultés qui sont décrites ci-après.

Le jumelage des roues rend très proches deux capteurs qu'il est difficile de différencier aussi bien à l'arrêt que pendant le fonctionnement du véhicule sans mettre en oeuvre des techniques de codage et d'identification particulièrement complexes et onéreuses.

En effet, par exemple, lors de l'apprentissage, c'est à dire lors de la phase de mise au point du système de gestion des informations issues des capteurs à l'arrêt, une activation simultanée des deux capteurs peut être réalisée involontairement lorsqu'ils sont interrogés par l'opérateur au moyen de son module électronique d'interrogation qu'il oriente vers le pneumatique extérieur.

De même, lors d'une phase de fonctionnement en déplacement, la proximité des capteurs des roues d'une même extrémité d'un essieu rend difficile le déchiffrage des messages de par la collision des trames et du fait que le rayonnement électromagnétique émis par les capteurs et reçu par le module de réception est de même puissance ce qui inhibe la rapacité à recevoir le message (récepteur rendu aveugle).

Une difficulté s'ajoute lorsque les capteurs sont liés à la valve et que, pour faciliter le gonflage des roues jumelées, les trous de valve sont alignés.

Pour assurer cette localisation le document US 2006/012475 propose un procédé de localisation des capteurs sur des roues installées coaxiales à la même extrémité d'un même essieu d'un véhicule comportant un module de réception associé au châssis du véhicule qui consiste à mesurer les distances séparant les capteurs du module de réception afin de comparer lesdites distances et localiser ainsi l'origine des signaux. La différence de distance étant particulièrement faible, un tel procédé peut présenter les inconvénients relevés plus haut.

Le document JP 2006021660 propose une discrimination entre les capteurs en associant une donnée discriminante issue du capteur et une donnée discriminante issue du module de réception. Une telle solution nécessite un nombre important de modules de réception et un module de gestion d'information complexe. De plus, elle n'évite pas la collision des trames d'information issues des capteurs logés dans des roues jumelées.

Le document US 2005/093687 propose un module portable d'interrogation des capteurs disposés dans les roues jumelées. Ce dispositif présente une tête pivotante afin de se positionner au plus prés du capteur et notamment dans l'intervalle séparant les roues. Ce dispositif a pour inconvénient de n'être utilisable qu'à l'arrêt.

### DESCRIPTION DE L'INVENTION

Partant de cet état de fait, la demanderesse a mené des recherches visant à résoudre les difficultés constatées dans l'exploitation d'un système de capteurs pour des véhicules présentant des roues jumelées.

Ces recherches ont abouti à la conception d'un procédé de positionnement des capteurs sur des roues installées coaxiales à la même extrémité d'un même essieu. Ce procédé est très peu coûteux et particulièrement facile à mettre en oeuvre. Il ne requiert pas de modification des technologies existantes de communication.

Selon l'invention, ce procédé de positionnement des capteurs sur des roues installées coaxiales à la même extrémité d'un même essieu d'un véhicule comportant un module de réception associé au châssis du véhicule, est remarquable en ce qu'il consiste à positionner les capteurs selon un intervalle angulaire supérieur ou égal à quatre-vingt dix (90) degrés d'une roue par rapport à l'autre de façon à ce que lors du fonctionnement en déplacement, la distance entre le module de réception et le capteur varie en fonction du tour de roue et à utiliser une liaison de type basses fréquences (LF) de sorte que la création d'une distance entre les points d'émission permette de faire varier la puissance des signaux reçus les rendant ainsi distincts.

Cet intervalle angulaire permet d'éloigner les deux capteurs malgré le jumelage des roues. Cet éloignement va permettre d'activer séparément les deux capteurs lors de la phase d'apprentissage. En outre, lors du fonctionnement en déplacement, la distance entre le module de réception et le capteur varie en fonction du tour de roue. Aussi, le signal sera reçu à des puissances différentes ce qui garantit la réception dudit signal sans les inconvénients précités. En effet, la puissance des signaux émis est égale mais la création d'une distance entre les points d'émission va permettre de faire varier la puissance des signaux reçus les rendant ainsi distincts.

Ainsi, par simple éloignement angulaire, le procédé de l'invention assure une meilleure lecture des informations issues des capteurs sans modifier lesdits capteurs ni les protocoles de communication.

Selon une caractéristique particulièrement avantageuse de l'invention, le procédé consiste à positionner les capteurs respectifs de chaque roue selon un intervalle angulaire sensiblement égal à cent quatre-vingt (180) degrés. En fixant l'intervalle au maximum possible, cette caractéristique non seulement garantit le décalage maximal entre les points d'émission des deux signaux ou trames mais permet en outre à l'opérateur de facilement retrouver le deuxième capteur une fois le premier activé.

Lorsque les capteurs ne sont pas associés à la valve de la roue dans le pneumatique de laquelle ils sont installés, le procédé consiste à positionner les capteurs au niveau des valves des roues et à positionner les roues de sorte que leur valve respective et donc leur capteur y associé soient positionnés selon l'intervalle angulaire souhaité.

Lorsque comme expliqué plus haut, les capteurs sont associés à la valve de la roue dans le pneumatique de laquelle ils sont installés, le procédé est particulièrement avantageux en ce qu'il consiste à positionner les roues de sorte que leur valve respective et donc leur capteur y associé, soient positionnés selon l'intervalle angulaire souhaité. Ainsi, ce n'est plus le capteur seul qui change de position angulaire mais l'ensemble de la roue de façon à positionner sa valve pour éloigner le capteur qu'elle supporte de celui porté par la valve de sa roue jumelle.

Le positionnement angulaire de la valve de la roue et donc d'une roue par rapport à sa jumelle peut être supérieur ou égal à quatre-vingt dix degrés ou sensiblement égal à cent quatre-vingt degrés de façon à profiter des effets techniques décrits plus haut. L'association des capteurs aux valves a ici pour avantage d'offrir un repère visuel à la position des capteurs lors de leur activation en phase apprentissage.

Lorsque le capteur ne peut être associé à la valve, le procédé est particulièrement avantageux en ce qu'il consiste à réaliser un repère visuel extérieur sur la jante de la roue jumelée extérieure au niveau de la position choisie du capteur. Ainsi, selon l'intervalle angulaire établi, l'opérateur sait où se trouve le deuxième capteur et où il doit orienter son module électronique d'interrogation.

Une autre solution à ce problème de repérage consiste à positionner les capteurs au niveau des valves.

Un autre objet de l'invention concerne le dispositif permettant de mettre en oeuvre le procédé ci-dessus décrit.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un procédé de positionnement des capteurs présents dans des roues jumelées conforme à l'invention.

### BRÈVE DESCRIPTION DES DESSINS

La figure 1 est un dessin schématique en coupe en vue de dessus d'un tracteur de camion présentant des essieux équipés de roues jumelées,
La figure 2 est un dessin schématique d'une vue de côté illustrant une première disposition de capteurs,
La figure 3 est un dessin schématique d'une vue de côté illustrant une autre disposition de capteurs.

### DESCRIPTION DES MODES DE RÉALISATION PRÉFÉRÉS

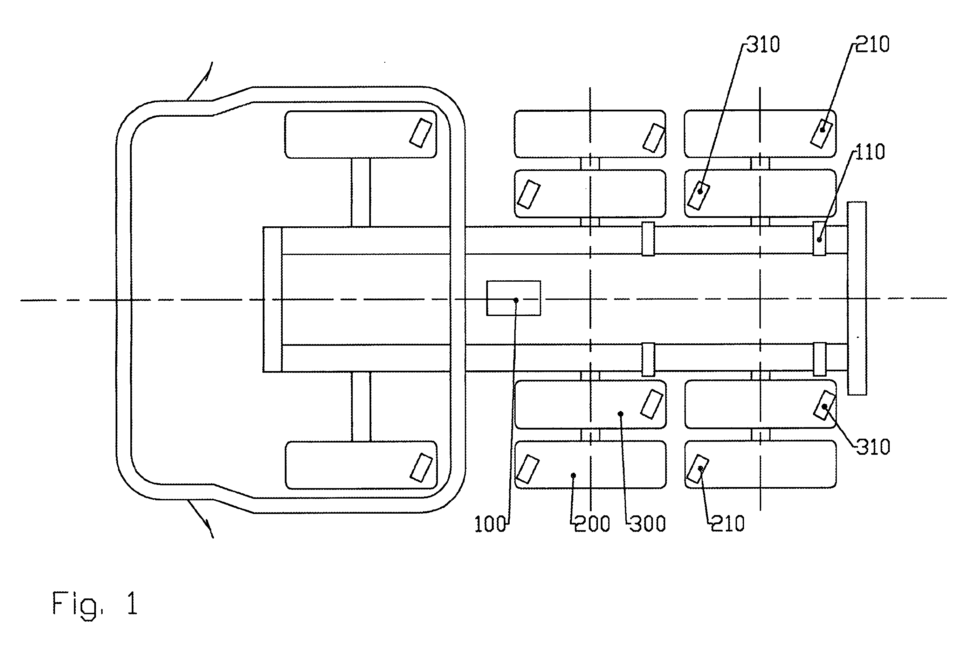

Le dessin de la figure 1 illustre les essieux d'un tracteur de camion référencé C dont les essieux arrières sont équipés à leurs extrémités de roues jumelées. Conformément à l'invention, les roues dudit camion C sont chacune équipées d'un capteur qui mesure la pression et/ou la température des pneumatiques dans lesquels ils sont logés.

Selon le mode de réalisation illustré, le camion C est équipé d'un dispositif qui comporte un module de réception 100 associé au châssis du camion et recevant des données issues d'antennes 110 de réception associées audit châssis pour chaque paire de roues jumelées 200 pour la roue extérieure et 300 pour la roue intérieure, chacune étant équipée d'un capteur 210 et 310 émettant les signaux contenant les informations liées à la température et à la pression des pneumatiques dans lesquels ils sont logés. Cette proximité entre les antennes réceptrices 110 liées au châssis du véhicule V et les capteurs émetteurs 210 et 310 tournant avec les roues permet d'utiliser une liaison basses fréquences (LF).

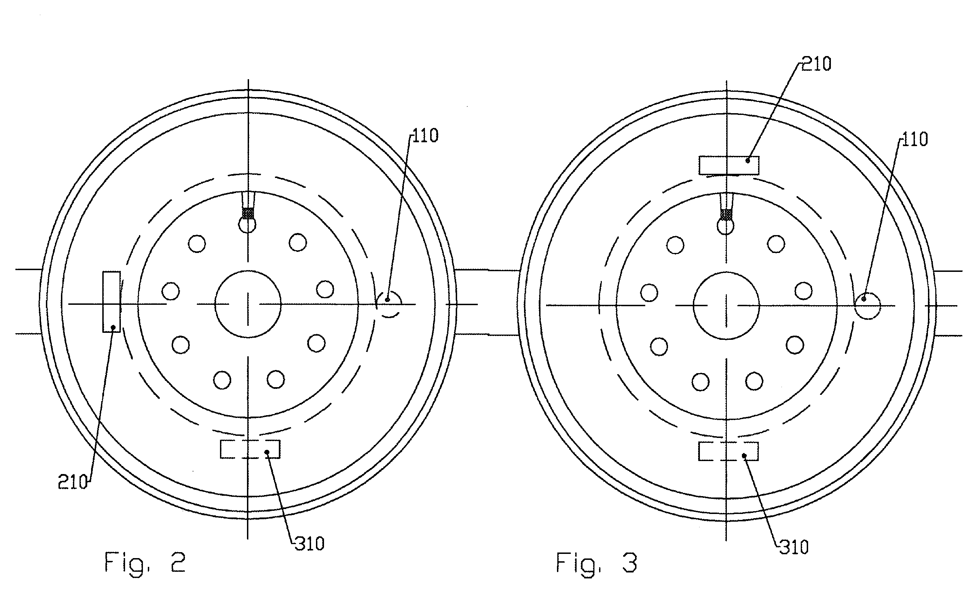

Selon le mode de réalisation illustré par les figures 1 et 3, les capteurs 210 (en traits forts) et 310 (en traits interrompus courts) sont positionnés selon un intervalle angulaire sensiblement égal à cent quatre-vingt degrés (180) d'une roue 200 par rapport à l'autre 300. Ainsi, lors du déplacement du véhicule, chaque capteur va passer devant l'antenne 110 selon un intervalle de temps le plus long possible du fait de l'éloignement angulaire le plus grand possible qui évite toute collision de signal et en conséquence une mauvaise prise en compte par l'antenne et par le module de réception 100 auquel elle est associée. Selon un mode de réalisation préféré, le signal est constitué par l'émission de trois trames.

Le mode de réalisation illustré par la figure 2 montre un positionnement des capteurs 210 et 310 qui ne sont pas associés à la valve de la roue dans le pneumatique de laquelle ils sont installés, selon un intervalle angulaire supérieur ou égal à quatre-vingt dix (90) degrés d'une roue par rapport à l'autre.

Le mode de réalisation illustré par le dessin de la figure 3 montre des capteurs 210 et 310 soit associés à la valve de la roue dans le pneumatique de laquelle ils sont installés, soit positionnés au niveau des valves (seule la valve 220 de la roue extérieure 200 apparaît).

On comprend que le procédé et le dispositif, qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Procédé de positionnement des capteurs sur des roues (200 et 300) installées coaxiales à la même extrémité d'un même essieu d'un véhicule (C) comportant un module de réception (100) associé au châssis du véhicule, **CARACTÉRISÉ EN CE QU'**il consiste à positionner les capteurs (210 et 310) selon un intervalle angulaire supérieur ou égal à quatre-vingt dix (90) degrés d'une roue (200) par rapport à l'autre (300) de façon à ce que lors du fonctionnement en déplacement, la distance entre le module de réception et le capteur varie en fonction du tour de roue et à utiliser une liaison de type basses fréquences (LF) de sorte que la création d'une distance entre les points d'émission permette de faire varier la puissance des signaux reçus les rendant ainsi distincts.

2. Procédé selon la revendication 1, **CARACTÉRISÉ PAR LE FAIT QU'**il consiste à positionner les capteurs (210 et 310) selon un intervalle angulaire sensiblement égal à cent quatre-vingt degrés.

3. Procédé selon la revendication 1, **CARACTÉRISÉ EN CE Qu'**il consiste à réaliser un repère visuel extérieur sur la jante de la roue jumelée extérieure (200) au niveau de la position choisie du capteur (210).

4. Procédé selon la revendication 1 du type de celui où les capteurs (210 et 310) ne sont pas associes à la valve de la roue (200 et 300) dans le pneumatique de laquelle ils sont installés, **CARACTÉRISÉ EN CE QU'**il consiste 4 positionner les capteurs (210 et 310) au niveau des valves des roues (200 et 300) et à positionner les roues (200 et 300) de sorte que leur valve respective et donc leur capteur (210 et 310) y associé soient positionnes selon l'intervalle angulaire souhaité.

5. Procédé selon la revendication 1 du type de celui où les capteurs (210 et 310) sont associés à la valve de la roue (200 et 300) dans le pneumatique de laquelle ils sont installés, **CARACTÉRISÉ EN CE Qu'**il consiste à positionner les roues (200 et 300) de sorte que leur valve respective et donc leur capteur (210 et 310) y associé soient positionnés selon l'intervalle angulaire souhaité.

## Claims

1. Method for positioning sensors on wheels (200 and 300) installed coaxial to the same end of the same axle of a vehicle (c) comprising a receiving module (100) associated to the chassis of the vehicle, **CHARACTERIZED IN THAT** it comprises positioning the sensors (210 and 310) according to an angular interval greater than or equal to ninety (90) degrees of one wheel (200) in relation to the other (300) in such a way that during the operation during displacement, the distance between the receiving module and the sensor varies according to the wheel revolution and using a link of the low frequency (LF) type in such a way that the creation of a distance between the emission points makes it possible to vary the power level of the signals received, and as such making them distinct.

2. Method according to claim 1, **CHARACTERIZED BY** THE FACT THAT it comprises positioning the sensors (210 and 310) according to an angular interval substantially equal to one hundred and eighty degrees.

3. Method according to claim 1, **CHARACTERIZED IN THAT** it comprises carrying out an outside visual reference mark on the rim of the outside twinned wheel (200) on the chosen position of the sensor (210).

4. Method according to claim 1 of the type of that wherein the sensors (210 and 310) are not associated to the valve of the wheel (200 and 300) in the tire wherein they are installed, **CHARACTERIZED IN THAT** it comprises positioning the sensors (210 and 310) on valves of the wheels (200 and 300) and positioning the wheels (200 and 300) in such a way that their respective valve and therefore their associated sensor (210 and 310) are positioned according to the angular interval desired.

5. Method according to claim 1 of the type of that wherein the sensors (210 and 310) are associated to the valve of the wheel (200 and 300) in the tire wherein they are installed, **CHARACTERIZED IN THAT** it comprises positioning the wheels (200 and 300) in such a way that their respective valve and therefore their associated sensor (210 and 310) are positioned according to the angular interval desired.

## Patentansprüche

1. Verfahren zur Positionierung von Sensoren auf den Rädern (200 und 300), die coaxial auf dem gleichen Ende einer gleichen Achse eins Fahrzeugs (C) installiert sind, umfassend ein Empfangsmodul (100), das mit dem Fahrgestell des Fahrzeugs assoziiert ist, **dadurch gekennzeichnet, dass** es darin beseht, die Sensoren (210 und 310) gemäß einem Winkelintervall von mehr als oder gleich neunzig (90) Grad eines Rades (200) bezüglich des anderen (300) zu positionieren, und dadurch, dass während des Fahrbetriebs der Abstand zwischen dem Empfangsmodul und dem Sensor je nach der Raddrehung variiert, und die Verwendung einer Verbindung des Typs Niederfrequenz (LF), so dass die Erzeugung eines Abstands zwischen den Ausgabepunkten erlaubt, die Stärke der empfangenen Signale zu variieren, um sie so zu unterscheiden.

2. Verfahren nach Anspruch 1, **dadurch gekennzeichnet, dass** es darin besteht, die Sensoren (210 und 310) gemäß einem Winkelintervall zu positionieren, das im Wesentlichen gleich einhundertachtzig Grad ist.

3. Verfahren nach Anspruch 1, **dadurch gekennzeichnet, dass** es darin besteht, eine äußere visuelle Markierung auf der Felge des äußeren Zwillingsrades (200) auf der Ebene der gewählten Position des Sensors (210) durchzuführen.

4. Verfahren nach Anspruch 1 der Art, bei dem die Sensoren (210 und 310) nicht mit dem Ventil des Rades (200 und 300) im Reifen, in dem sie installiert sind, assoziiert sind, **dadurch gekennzeichnet, dass** es darin besteht, die Sensoren (210 und 310) auf der Ebene der Ventile der Räder (200 und 300) zu positionieren, und darin, die Räder (200 und 300) so zu positionieren, dass ihr entsprechendes Ventil und somit ihr damit assoziierter Sensor (210 und 310) gemäß dem gewünschten Winkelintervall positioniert sind.

5. Verfahren nach Anspruch 1 der Art, bei dem die Sensoren (210 und 310) mit dem Ventil des Rades (200 und 300) im Reifen, in dem sie installiert sind, assoziiert sind, **dadurch gekennzeichnet, dass** es darin besteht, die Räder (200 und 300) so zu positionieren, dass ihr entsprechendes Ventil und somit ihr damit assoziierter Sensor (210 und 310) gemäß dem gewünschten Winkelintervall positioniert sind.
